# EUROPÄISCHE PATENTSCHRIFT

(11) **EP 0 705 742 B1**
(45) Veröffentlichungstag und Bekanntmachung des Hinweises auf die Patenterteilung: **11.08.1999**
(21) Anmeldenummer: 95115415.2
(22) Anmeldetag: 29.09.1995
(51) Int. Cl.: B60R 22/46, B60R 21/32

(54) **Auslösevorrichtung für ein Insassen-Rückhaltesystem**
Triggering device for an occupant restraining system
Dispositif de déclenchement pour système de retenue pour occupant

(30) Priorität: 05.10.1994 DE 4435619; 14.03.1995 DE 19509176
(43) Veröffentlichungstag der Anmeldung: 10.04.1996
(73) Patentinhaber: TRW Occupant Restraint Systems GmbH & Co. KG, 73551 Alfdorf (DE)
(72) Erfinder: Röhrle, Martin, D-73557 Mutlangen (DE); Böhmler, Klaus, D-73525 Schwäbisch Gmünd (DE); Huber, Uwe, D-73553 Alfdorf (DE); Maiwald, Helmut, D-73579 Schechingen (DE)
(74) Vertreter: Degwert, Hartmut, Dipl.-Phys.

(56) Entgegenhaltungen:
- DE-A- 4 013 046
- US-A- 3 625 068
- US-A- 3 662 606

## Beschreibung

Die Erfindung betrifft eine Auslösevorrichtung für ein Insassen-Rückhaltesystem, mit einem translatorisch in einem Gehäuse gegen eine Rückstellfeder zwischen einer Ruhestellung und einer Auslösestellung verschiebbaren, fahrzeugsensitiven Trägheitskörper und einem Aktivierungsbolzen zur Aktivierung eines Zünders, wobei der Aktivierungsbolzen federbeaufschlagt und durch ein Gesperre in einer Bereitschaftsstellung gehalten ist, wobei ein in dem Gehäuse translatorisch verschiebbarer Steuerkörper, der durch eine Feder in eine Ruhestellung belastet ist, funktionell zwischen dem Trägheitskörper und dem Gesperre angeordnet ist und wobei der Steuerkörper durch den Trägheitskörper anstoßbar und durch Aufnahme einer vorbestimmten Stoßenergie aus der Ruhestellung in eine Freigabestellung bewegbar ist, in welcher er das Gesperre zur Freigabe des Aktivlerungsbolzens freigibt.

Zur Auslösung von Insassen-Rückhaltesystemen in Fahrzeugen, beispielsweise Gurtstraffer oder aufblasbare Schutzkissen, sind elektronische, elektromechanische und mechanische Beschleunigungssensoren bekannt. Elektronische Sensoren sind mit komplexen Verarbeitungsschaltungen ausgestattet, die das Signal eines Beschleunigungsaufnehmers verarbeiten und einen elektrischen Auslöseimpuls liefern, wenn das über die Zeit integrierte Beschleunigungssignal einen vorbestimmten Schwellwert überschreitet. Ein solcher elektronischer Beschleunigungssensor zeichnet sich durch hohe Reproduzierbarkeit des Auslöseverhaltens und ein hohes Maß an Sicherheit vor Fehlauslösung durch am Fahrzeug auftretende Erschütterungen aus. Er läßt sich jedoch nur mit hohem technischen Aufwand realisieren.

Um auch mit mechanischen Beschleunigungssensoren eine ausreichende Sicherheit gegen Fehlauslösung zu erzielen, muß der verwendete Trägheitskörper bis zur Auslösung einen gewissen Betätigungshub entgegen der Wirkung einer Rückstellfeder durchlaufen, wodurch das integrierende Verhalten einer elektronischen Verarbeitungsschaltung simuliert werden kann. Um eine gute Reproduzierbarkeit des Auslöseverhaltens zu gewährleisten, muß dieser Betätigungshub mindestens einige Millimeter betragen. Der Trägheitskörper wird durch die Rückstellfeder unter einer solchen Vorspannung in seine Ruhestellung belastet, daß er sich erst bei Beschleunigungswerten in Bewegung setzt, die kaum niedriger sind als der mittlere Beschleunigungswert, bei dem die Auslösung erfolgen soll, sofern die Beschleunigung andauert. Bei einem Gurtstraffer oder Gassacksystem beträgt dieser mittlere Beschleunigungswert etwa 12 g. Da aber die Zeitspanne bis zur Auslösung direkt der Wegstrecke des Sensorkörpers proportional ist und zur Erzielung einer ausreichenden Reproduzierbarkeit eine relativ große Wegstrecke benötigt wird, kann mit herkömmlichen mechanischen Beschleunigungssensoren eine kurze Ansprechzeit nicht erreicht werden.

Im Hinblick auf eine Kostenreduzierung wird bei Auslösevorrichtungen ferner angestrebt, daß nach Art eines modularen Aufbaus die mit ein und derselben Auslösevorrichtung erzielte Auslösung in verschiedener Weise verwendet werden kann, beispielsweise für das direkte Auslösen eines Schlagbolzens für die Aktivierung eines Zünders für einen Gasgenerator oder für das indirekte Auslösen eines räumlich von der Auslösevorrichtung getrennten Schlagbolzens über eine zwischengeschaltete mechanische Vorrichtung. Bei den bekannten Auslösevorrichtungen tritt dabei das Problem auf, daß der Betätigungswiderstand einer von der Auslösevorrichtung aktivierten Vorrichtung auf das Auslöseverhalten der Auslösevorrichtung zurückwirkt, da beispielsweise ein über eine zwischengesetzte mechanische Übertragungsvorrichtung indirekt betätigter Schlagbolzen einen höheren Betätigungswiderstand aufweist als ein direkt betätigter Schlagbolzen.

Eine Rückwirkung des Betätigungswiderstandes einer von der Auslösevorrichtung aktivierten Vorrichtung auf das Auslöseverhalten der Auslösevorrichtung kann vermieden werden, indem die Trägheitsmasse nicht unmittelbar mit dem Gesperre für den Aktivierungsbolzen gekoppelt ist, sondern der funktionell dazwischenliegende Steuerkörper verwendet wird. Der Trägheitskörper spricht bereits auf niedrige Beschleunigungen, vorzugsweise ab etwa 2 g, an und erreicht bei andauernder Beschleunigung den Beginn des eigentlichen Betätigungshubes mit einer Geschwindigkeit, die sich aus dem Produkt der wirksamen Beschleunigung und der für die zurückgelegte Wegstrecke benötigten Zeit errechnen läßt. Wenn der Trägheitskörper nun auf den Steuerkörper trifft, überträgt er seine kinetische Energie auf diesen im wesentlichen als Stoß. Der seinerseits federbelastete Steuerkörper wird nur dann in die Freigabestellung bewegt, wenn der Trägheitskörper eine vorbestimmte Stoßenergie auf ihn übertragen hat. Falls die Stoßenergie zur Auslösung nicht ausreicht, wird der Steuerkörper durch die ihm zugeordnete Feder wieder in seine Ruhestellung zurückbewegt. Bei nachlassender Beschleunigung wird auch der Trägheitskörper durch die Rückstellfeder wieder in seine Ruhestellung zurückbewegt.

Eine Auslösevorrichtung der eingangs genannten Art ist aus der US-A-3,662,606 bekannt. Das dort verwendete Gesperre besteht aus einem Rohr mit zwei Öffnungen, in denen Sperrkugeln angeordnet sind, die von dem Steuerkörper in einer Stellung gehalten werden, in der sie in eine Nut des Aktivierungsbolzens eingreifen und diesen in seiner Bereitschaftsstellung halten. Bei dieser Gestaltung kann ein vergleichsweise großer Weg des Steuerkörpers erforderlich sein, um die Sperrkugeln und damit den Aktivierungsbolzen vollständig freizugeben. Somit kann sich eine vergleichsweise lange Auslösezeit ergeben. Dasselbe scheint für die aus der DE-A-4 013 046 bekannten Auslösevorrichtung zu gelten, die einem mechanischen Sensor zeigt, bei dem ein Sperrhebel verwendet wird, der über einen weiteren Sperrhebel einen Schlagbolzen im Ruhezustand blockiert.

Ausgehend von diesen Problemen besteht die Aufgabe der Erfindung darin, eine Auslösevorrichtung zu schaffen, deren Auslösezeit mit der Auslösezeit elektronischer Sensoren vergleichbar ist und deren Auslöseverhalten von der Art der von ihr bewirkten Aktivierung unabhängig ist.

Diese Aufgabe wird bei einer Auslösevorrichtung der eingangs genannten Art dadurch gelöst, daß das Gesperre einen Sperrhebel aufweist, der um eine am Gehäuse festgelegte Achse schwenkbar ist und an seinem einen Ende eine am Aktivierungsbolzen angreifende Haltenase sowie an seinem anderen Ende eine Haltefläche aufweist, die auf einer zugeordneten Stützfläche am Steuerkörper abgestützt ist. Die Verwendung eines Sperrhebels ermöglicht, eine mit der Ansprechzeit eines elektronischen Sensors vergleichbare, kurze Ansprechzeit zu erzielen.

Bei der erfindungsgemäßen Auslösevorrichtung kann die Bewegungsstrecke des Trägheitskörpers aus der Ruhelage in die Auslösestellung relativ groß sein, damit Fehlauslösungen durch Stöße oder Erschütterungen vermieden werden. Da aber der Trägheitskörper bereits bei relativ niedrigen Beschleunigungswerten aus seiner Ruhelage heraus in Richtung der Auslösestellung bewegt wird, ist die Zeitspanne zwischen dem Auftreten hoher, zur Auslösung führender Beschleunigungswerte und dem Erreichen der Auslösestellung merklich kürzer als bei herkömmlichen mechanischen Auslösevorrichtungen. Da die Auslösevorrichtung durch Stoßenergie aktiviert wird, wirkt der Betätigungswiderstand einer von der Auslösevorrichtung aktivierten Vorrichtung nicht auf das Auslöseverhalten der Auslösevorrichtung zurück.

Gemäß einer bevorzugten Ausführungsform der Erfindung ist der Aktivierungsbolzen ein Schlagbolzen und der Zünder ein Schlagzünder, auf den der Schlagbolzen einwirkt.

Gemäß einer weiteren bevorzugten Ausführungsform der Erfindung ist der Zünder räumlich von dem Aktivierungsbolzen getrennt, und der Aktivierungshub des Aktivierungsbolzens wird durch ein Übertragungssystem zu dem Zünder übertragen.

Weitere Merkmale und Vorteile der Erfindung ergeben sich aus den Unteransprüchen sowie aus der nachfolgenden Beschreibung von zwei bevorzugten Ausführungsformen der Erfindung unter Bezugnahme auf die beigefügten Zeichnungen. In den Zeichnungen zeigen:
Fig. 1 eine Prinzipdarstellung zur Veranschaulichung einer ersten vorteilhaften Ausführungsform der Auslösevorrichtung;
Fig. 2 eine schematische, teilweise geschnitten gezeigte Perspektivansicht der an einem Gurtaufrollerrahmen montierten Auslösevorrichtung gemäß der ersten vorteilhaften Ausführungsform der Erfindung; und
Fig. 3 eine schematische Seitenansicht der Auslösevorrichtung gemäß einer zweiten vorteilhaften Ausführungsform der Erfindung.

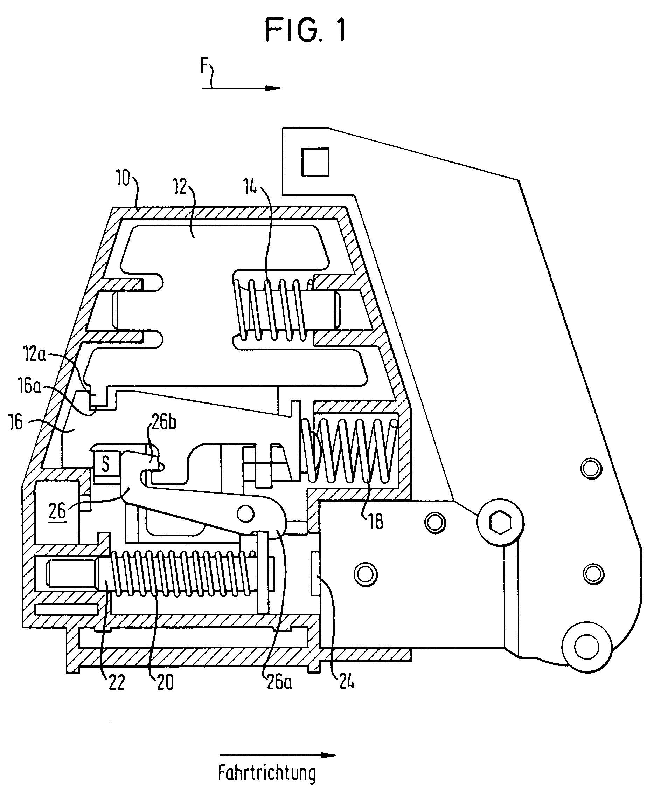

In einem schützenden Gehäuse 10 ist ein Trägheitskörper 12 gegen die Wirkung einer Rückstellfeder 14 translatorisch verschiebbar angeordnet. Neben diesem Trägheitskörper 12 und parallel zu diesem translatorisch verschiebbar ist ein Steuerkörper 16 in dem Gehäuse 10 angeordnet. Der Trägheitskörper 12 greift mit einem Ansatz 12a in eine Ausnehmung 16a des Steuerkörpers 16 ein. Diese Ausnehmung 16a ist weiter als die Breite des Ansatzes 12a, so daß der Ansatz 12a mit Spiel in die Ausnehmung 16a hineinragt. Der Steuerkörper 16 ist seinerseits durch eine Druckfeder 18 in die in Fig. 1 gezeigte Ruhestellung beaufschlagt.

Ein durch eine Druckfeder 20 federbelasteter Aktivierungsbolzen 22, der in der ersten bevorzugten Ausführungsform ein Schlagbolzen ist, wird durch ein noch näher zu beschreibendes Gesperre in einer Bereitschaftsstellung im Abstand von einem Zünder 24 gehalten, der in dieser Ausführungsform ein Schlagzünder ist. Das Gesperre umfaßt im wesentlichen einen um eine gehäusefeste Achse schwenkbar gelagerten Sperrhebel 26, der an seinem einen Ende eine Sperrnase 26a aufweist, die am Aktivierungsbolzen 22 angreift, und ist an seinem anderen, hakenförmig gebogenen Ende 26b mit einer Haltefläche versehen, die sich auf einer zugeordneten Abstützfläche am Steuerkörper 16 abstützt.

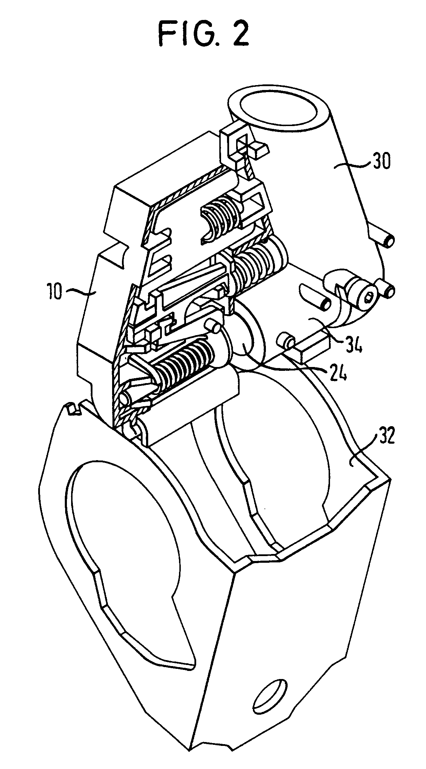

Wie in Fig. 2 gezeigt ist, wird das Gehäuse 10 mit einem Sockel 30, an dem der Zylinder eines pyrotechnischen Gurtstraffer-Antriebs befestigt ist, am Rahmen 32 eines Gurtaufrollers montiert. Der Sockel 30 dient ferner zur Aufnahme des pyrotechnischen Gasgenerators 34, welcher mittels des Schlagzünders 24 auslösbar ist.

Die Einbauorientierung der Auslösevorrichtung ist in Fig. 1 durch einen Pfeil F markiert, welcher der Fahrtrichtung entspricht. Die Massen des Trägheitskörpers 12 und des Steuerkörpers 16 stehen in einem Verhältnis zwischen etwa 10:1 und etwa 20:1. Die Druckfeder 18 ist wesentlich stärker dimensioniert als die Rückstellfeder 14. Sobald eine Verzögerung von mehr als 2 g auf das Gehäuse 10 einwirkt, überwindet die Trägheitsmasse 12 die Kraft der Rückstellfeder 14, wird beschleunigt und erwirbt kinetische Energie. Bei andauernder Verzögerung trifft der Ansatz 12a gegen eine Anschlagfläche der Ausnehmung 16a, wobei ein Stoß von dem Trägheitskörper 12 auf den Steuerkörper 16 übertragen wird. Wenn dieser Stoß eine ausreichende Stoßenergie aufweist, wird der Steuerkörper 16 aus seine Ruhestellung in seine Freigabestellung verlagert, so daß sich der Haken am Ende des Sperrhebels 26 von der Abstützfläche an dem Steuerkörper 16 löst. Der Sperrhebei wird dann unter der Wirkung der Druckfeder 20 verschwenkt und gibt den Aktivierungsbolzen 22 frei. Dieser wird durch die Druckfeder 20 beschleunigt und trifft auf dem Schlagzünder 24 auf, der dann aktiviert wird und seinerseits den pyrotechnischen Gasgenerator 34 auslöst. Durch die von diesem erzeugten Druckgase wird dann der Kolben/Zylinder-Linearantrieb des Gurtstraffers aktiviert.

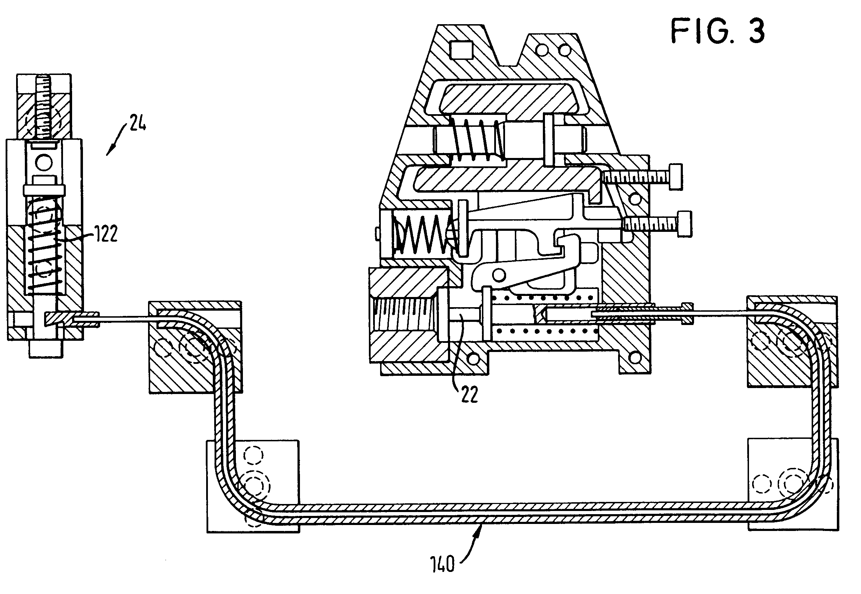

Da die Anordnung des Zünders im allgemeinen von dem Anbringungsort des von ihm gezündeten Gasgenerators abhängt, ist bei einer Anordnung gemäß der ersten Ausführungsform auch der Anbringungsort der Auslösevorrichtung vorgegeben. Es hat sich aber herausgestellt, daß durch eine räumliche Trennung der Auslösevorrichtung von dem Gasgenerator die Auslösevorrichtung an einem beispielsweise für die Auslösung günstigeren Ort im Fahrzeug eingebaut werden kann. Eine solche Ausführungsform ist in Fig. 3 dargestellt. Während bei der Anordnung der Auslösevorrichtung nach der ersten Ausführungsform der Aktivierungsbolzen 22 direkt auf den Zünder 24 einwirkt, ist bei der in Fig. 3 dargestellten zweiten Ausführungsform der Zünder 24 räumlich von dem Aktivierungsbolzen 22 getrennt. Der Hub des Aktivierungsbolzens 22 wird über eine Übertragungsvorrichtung zu dem Zünder übertragen. In Fig. 3 ist die aus den Figuren 1 und 2 bekannte Auslösevorrichtung zu sehen. Der einzige Unterschied zu dieser Auslösevorrichtung besteht darin, daß bei Freigabe des Aktivierungsbolzens 22 dieser in den Figuren 1 und 2 eine Bewegung bezüglich der Figuren nach rechts ausführt, während er bei der Freigabe in Fig. 3 eine Bewegung nach links ausführt. Dieser Aktivierungshub wird auf einen Bowdenzug 140 und von diesem auf einen Hebel zur Freigabe eines Schlagbolzens 122 übertragen, der den Zünder 24 auslöst. Durch die Zwischenschaltung der Übertragungsvorrichtung, hier des Bowdenzuges 140, zwischen den Aktivierungsbolzen 22 und den Schlagbolzen 122 kann der Zünder 24 räumlich von der Auslösevorrichtung getrennt sein. Bei dieser Ausführungsform kommt der Vorteil der erfindungsgemäßen Auslösevorrichtung besonders zum Tragen, wonach der Betätigungswiderstand einer von der Auslösevorrichtung aktivierten Vorrichtung nicht auf das Auslöseverhalten der Auslösevorrichtung zurückwirkt. Obwohl der Betätigungswiderstand des bei der zweiten Ausführungsform zwischen dem Aktivierungsbolzen und dem Zünder verwendeten Bowdenzuges deutlich höher sein kann als der Betätigungswiderstand des bei der ersten Ausführungsform direkt betätigten Schlagbolzens, verändert sich das Auslöseverhalten der Auslösevorrichtung nicht.

## Patentansprüche

1. Auslösevorrichtung für ein Insassen-Rückhaltesystem, mit einem translatorisch in einem Gehäuse (10) gegen eine Rückstellfeder (14) zwischen einer Ruhestellung und einer Auslösestellung verschiebbaren, fahrzeugsensitiven Trägheitskörper (12) und einem Aktivierungsbolzen (22) zur Aktivierung eines Zünders (24), wobei der Aktivierungsbolzen (22) federbeaufschlagt und durch ein Gesperre (26) in einer Bereitschaftsstellung gehalten ist, wobei ein in dem Gehäuse (10) translatorisch verschiebbarer Steuerkörper (16), der durch eine Feder (18) in eine Ruhestellung belastet ist, funktionell zwischen dem Trägheitskörper (12) und dem Gesperre (26) angeordnet ist und wobei der Steuerkörper (16) durch den Trägheitskörper (12) anstoßbar und durch Aufnahme einer vorbestimmten Stoßenergie aus der Ruhestellung in eine Freigabestellung bewegbar ist, in welcher er das Gesperre (26) zur Freigabe des Aktivierungsbolzens (22) freigibt, dadurch gekennzeichnet, daß das Gesperre einen Sperrhebel (26) aufweist, der um eine am Gehäuse festgelegte Achse schwenkbar ist und an seinem einen Ende eine am Aktivierungsbolzen angreifende Haltenase (26a) sowie an seinem anderen Ende (26b) eine Haltefläche aufweist, die auf einer zugeordneten Stützfläche am Steuerkörper (16) abgestützt ist.

2. Auslösevorrichtung nach Anspruch 1, dadurch gekennzeichnet, daß der Trägheitskörper (12) und der Steuerkörper (16) Parallel zueinander verschiebbar sind.

3. Auslösevorrichtung nach Anspruch 2, dadurch gekennzeichnet, daß der Trägheitskörper (12) und der Steuerkörper (16) nebeneinander angeordnet sind.

4. Auslösevorrichtung nach Anspruch 1, dadurch gekennzeichnet, daß der Sperrhebel (26) ein hakenförmiges Ende (26b) aufweist, an dem die Haltefläche gebildet ist.

5. Auslösevorrichtung nach einem der vorhergehenden Ansprüche, dadurch gekennzeichnet, daß die Massen des Trägheitskörpers (12) und des Steuerkörpers (16) in einem Verhältnis zwischen 10:1 und 20:1 stehen.

6. Auslösevorrichtung nach einem der vorhergehenden Ansprüche, dadurch gekennzeichnet, daß der Aktivierungsbolzen ein Schlagbolzen (22) und der Zünder ein Schlagzünder (24) ist, auf den der Schlagbolzen (22) direkt einwirkt.

7. Auslösevorrichtung nach Anspruch 6, dadurch gekennzeichnet, daß ein von dem Schlagzünder (24) zündbarer Gasgenerator (124) räumlich von der Auslösevorrichtung getrennt angeordnet ist.

8. Auslösevorrichtung nach Anspruch 6, dadurch gekennzeichnet, daß der Gasgenerator (124) in unmittelbarer Nähe des Schlagzünders (24) angeordnet ist.

9. Auslösevorrichtung nach einem der Ansprüche 1 bis 5, dadurch gekennzeichnet, daß der Zünder (24) räumlich von dem Aktivierungsbolzen (22) getrennt ist und der Aktivierungshub des Aktivierungsbolzens (22) durch ein Übertragungssystem zu dem Zünder (24) übertragen wird.

10. Auslösevorrichtung nach Anspruch 9, dadurch gekennzeichnet, daß der Zünder ein Schlagzünder (24) ist und daß durch die Freigabe des Aktivierungsbolzens (22) ein federbelasteter Schlagbolzen (122) zum Aktivieren des Zünders (24) freigegeben wird.

11. Auslösevorrichtung nach Anspruch 10, dadurch gekennzeichnet, daß der Schlagbolzen (122) und der Aktivierungsbolzen (22) über einen Bowdenzug miteinander verbunden sind.

## Claims

1. A trip device for an occupant restraint system, comprising a vehicle-sensitive inertial body (12) able to be shifted in translation in a housing (10) against a return spring (14) between a neutral position and a trip position, and an activating pin (22) for activation of an igniter (24), the activating pin (22) being acted upon by a spring and being held in a standby position by a locking mechanism (26), a control body (16) able to be shifted in translation in the housing (10) being biased by a spring (18) into a neutral position and being functionally arranged between the inertial body (12) and the locking mechanism (26), and the control body (16) being able to be struck by the inertial body (12) and, on being imparted a predetermined amount of strike energy, being able to be moved out of the neutral position into a release position in which it releases the locking mechanism (26) for release of the activating pin (22), characterized in that the locking mechanism possesses a catch lever (26) which is able to be pivoted about an axis set in relation to the housing and at its one end possesses a holding nose (26a) engaging the activating pin and at its other end (26b) possesses a holding surface, which bears against an associated support surface on the control body (16).

2. The trip device as claimed in claim 1, characterized in that the inertial body (12) and the control body (16) are adapted to be shifted parallel to one another.

3. The trip device as claimed in claim 2, characterized in that the inertial body (12) and the control body (16) are arranged adjacent to each other.

4. The trip device as claimed in claim 1, characterized in that the catch lever (26) has a hooked end (26b), on which the holding surface is formed.

5. The trip device as claimed in any one of the preceding claims, characterized in that the masses of the inertial body (12) and of the control body (16) bear a relationship of between 10 : 1 and 20 : 1 to one another.

6. The trip device as claimed in any one of the preceding claims, characterized in that the activating pin is an impact pin (22) and the igniter is an impact igniter (24), on which the impact pin (22) directly acts.

7. The trip device as claimed in claim 6, characterized in that a gas generator (124) adapted to be fired by the impact igniter (24) is arranged separated in space from the trip device.

8. The trip device as claimed in claim 6, characterized in that the gas generator (124) is arranged in the immediate vicinity of the impact igniter (24).

9. The trip device as claimed in any one of claims 1 to 5, characterized in that the igniter (24) is separated in space from the activating pin (22) and the activating stroke of the activating pin (22) is transmitted by a transmission system to the igniter (24).

10. The trip device as claimed in claim 9, characterized in that the igniter is an impact igniter (24) and that release of the activating pin (22) causes release of a spring-loaded impact pin (122) for activation of the igniter (24).

11. The trip device as claimed in claim 10, characterized in that the impact pin (122) and the activation pin (22) are connected together by a bowden cable.

## Revendications

1. Dispositif de déclenchement pour un système de retenue pour les passagers d'un véhicule, avec une masse d'inertie (12) qui peut coulisser par translation dans un boîtier (10), à l'encontre de l'action d'un ressort de rappel (14) entre une position de repos et une position de déclenchement, et qui est sensible aux mouvements du véhicule, et avec une tige d'actionnement (22), qui sert à actionner une amorce (24), la tige d'actionnement (22) étant comprimée par un ressort et étant maintenue par un dispositif d'encliquetage (26) dans une position d'attente, un corps de commande (16), qui peut coulisser par translation dans le boîtier (10) et qui est comprimé par un ressort (18) dans une position de repos, étant disposé entre la masse d'inertie (12) et le dispositif d'encliquetage (26), et le corps de commande (16) pouvant être heurté par la masse d'inertie (12) et pouvant, en recevant un choc d'une énergie prédéterminée, sortir de sa position de repos et passer dans une position de libération, dans laquelle il libère le dispositif d'encliquetage (26) servant à libérer la tige d'actionnement (22), caractérisé en ce que le dispositif d'encliquetage présente un levier de blocage (26), qui peut pivoter autour d'un axe fixé sur le boîtier, et qui présente à l'une de ses extrémités un nez de retenue (26a) venant en prise sur la tige d'actionnement et, à son autre extrémité (26b), une surface de retenue qui prend appui sur une surface d'appui correspondante sur le corps de commande (16).

2. Dispositif de déclenchement selon la revendication 1, caractérisé en ce que la masse d'inertie (12) et le corps de commande (16) peuvent coulisser parallèlement l'un à l'autre.

3. Dispositif de déclenchement selon la revendication 2, caractérisé en ce que la masse d'inertie (12) et le corps de commande (16) sont disposés à côté l'un de l'autre.

4. Dispositif de déclenchement selon la revendication 1, caractérisé en ce que le levier de blocage (26) présente une extrémité en forme de crochet (26b), sur laquelle est formée la surface de retenue.

5. Dispositif de déclenchement selon l'une des revendications précédentes, caractérisé en ce que les poids de la masse d'inertie (12) et du corps de commande (16) sont dans un rapport compris entre 10:1 et 20:1.

6. Dispositif de déclenchement selon l'une des revendications précédentes, caractérisé en ce que la tige d'actionnement est un percuteur (22) et l'amorce une amorce à percussion (24), sur laquelle le percuteur (22) agit directement.

7. Dispositif de déclenchement selon la revendication 6, caractérisé en ce qu'un générateur de gaz (124), qui peut être allumé par l'amorce à percussion (24), est disposé de façon séparée dans l'espace par rapport au dispositif de déclenchement.

8. Dispositif de déclenchement selon la revendication 6, caractérisé en ce que le générateur de gaz (124) est disposé à proximité immédiate de l'amorce à percussion (24).

9. Dispositif de déclenchement selon l'une des revendications 1 à 5, caractérisé en ce que l'amorce (24) est séparée dans l'espace de la tige d'actionnement (22) et en ce que la course de la tige d'actionnement (22) est transmise par un système de transmission à l'amorce (24).

10. Dispositif de déclenchement selon la revendication 9, caractérisé en ce que l'amorce est une amorce à percussion (24) et en ce que par la libération de la tige d'actionnement (22), une tige de percussion (122), comprimée par un ressort, est libérée pour actionner l'amorce (24).

11. Dispositif de déclenchement selon la revendication 10, caractérisé en ce que la tige de percussion (122) et la tige d'actionnement (22) sont reliées l'une à l'autre par un câble Bowden.
